# EUROPEAN PATENT SPECIFICATION

(11) **EP 1 835 602 B1**
(45) Date of publication and mention of the grant of the patent: **10.08.2016**
(21) Application number: 07405072.5
(22) Date of filing: 07.03.2007
(51) Int. Cl.: H02K 33/16

(54) **Moving magnet actuator with counter-cogging end-ring and asymmetrical armature stroke**
Beweglicher magnetischer Aktor mit gegenverzahntem Abschlussring und asymmetrischem Ankerhub
Actionneur magnétique en mouvement avec collier d'ensouple à denture et course d'armature asymétrique

(30) Priority: 13.03.2006 US 743463 P; 12.07.2006 US 608200
(43) Date of publication of application: 19.09.2007
(73) Proprietor: WOODWARD GOVERNOR COMPANY, Rockford Illinois 61125-7001 (US)
(72) Inventor: Scanlon, Matthew J., Mount Prospect, Illinois 60056 (US)
(74) Representative: Conroy, John

(56) References cited:
- EP-A2- 0 580 117
- EP-A2- 1 298 363
- US-A- 5 896 076

## Description

### BACKGROUND OF THE INVENTION

The present invention relates to a moving magnet actuator (MMA) in accordance with the preamble of claim1.

Moving magnet actuators generally comprise an armature containing a sintered, anisotropic, axially-oriented, permanent ring magnet sandwiched between two magnetically conductive pole end pieces that are affixed to a non-conductive shaft. When an electromotive force is imparted on the permanent magnet such as by two in-series, oppositely wound, coils located in a radial air gap between the outer diameter of the magnetically conductive pole pieces and the inner diameter of a magnetically conductive conduit that encloses the MMA components, the shaft will be caused to move axially in a positive or negative direction. The shaft typically extends outside the magnetic conduit and is used to unseat or seat a value or operate as a switch. Such MMAs are commonly used in a number of industrial applications. For example, MMAs are often used to control the fuel feed rate for a diesel engine. Other applications include, but are not limited to liquid heat generators.

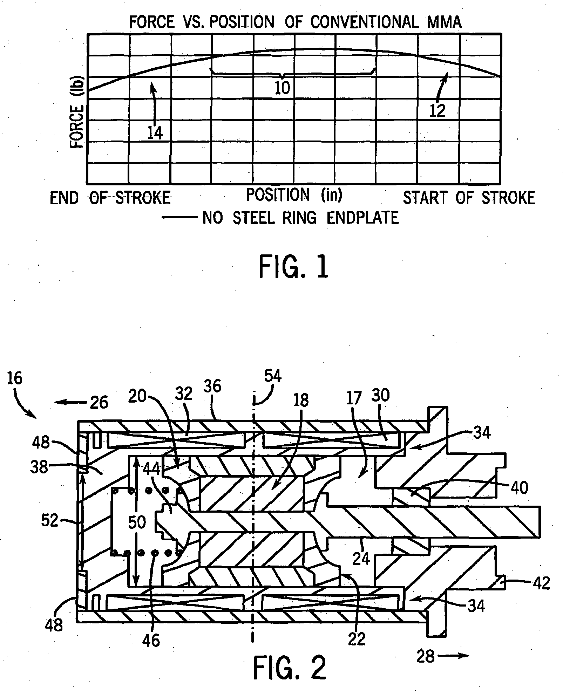

The above-described conventional construction of an MMA results in a magnetic circuit that produces an attractive force from one coil or winding and a repelling force by the other coil or winding. The coils operate in the same direction thereby accelerating the armature in either the positive or negative directions, depending upon the polarity of the windings. Magnetic flux lines circulating from the magnetically conductive conduit across one winding through the magnetically conductive pole piece (endplate) through the magnet to the other magnetically conductive pole piece (endplate) and across the other winding back to the magnetically conductive conduit produce the electromotive force that causes translation of the armature relative to the magnetic conduit. Typically, the MMA armature has a range of travel or stroke that is symmetrical about a radially-orientated centerline that is perpendicular to the central axis of the actuator. Moreover, MMA's typically operate according to a force versus position curve that has an umbrella-like shape, such as that illustrated in Fig. 1.

As illustrated in Fig. 1, the greatest magnitude of electromotive force 10 is found in the central portion of the actuator's range of motion, which is defined along the x-axis in inches. Force is defined in pounds along the y-axis. This actuator's range of motion is generally referred to as the actuator's stroke and, as shown in Fig. 1, for most MMA's, more electromotive force is present at the center of the actuator's stroke than at the beginning 12 or the end 14.

This conventional MMA construction produces a "cogging" effect as a result of the armature wanting to center itself relative to the boundaries of the magnetically conductive conduit within which it travels. This cogging effect or force is increasingly additive to the electromagnetic force acting on the armature when the MMA is powered. This additive force reaches a maximum at the radial center of the magnetically conductive conduit. Additionally, when the armature is moving away from the radial center, the cogging force is subtractive to the electromagnetic force acting on the armature. Thus, as the armature moves away from the radial center of the conduit, the cogging force pulls the armature back to the radial center. This subtractive effect is particularly undesirable.

The subtractive force placed on the armature affects the response time of the armature. That is, when the MMA is powered, the armature will translate axially within the conductive conduit it sits. Typically, for the armature to translate from its rest to its fully translated position, the force exerted on the armature by a biasing spring must be overcome. If the spring bias is not overcome, the armature will not reach its fully translated position. Moreover, the armature will reciprocate within the conduit as it "hunts" for a position of equilibrium. In other words, the armature will push against the spring and the spring will push back. The aforementioned cogging effect increases the force necessary to compress the spring. As a result, the armature must compress the spring and overcome the cogging forces placed thereon to reach a fully translated position. It therefore follows that if the cogging force can be reduced or at least countered, the armature must only overcome the k-factor of the spring when going from an initial to a fully translated (open) position. Accordingly, the work needed to translate the armature is increased by the cogging force.

Therefore, if the work needed to translate the armature remains constant, a spring with a reduced k-factor must be used to account for the cogging force.

In other words, the force of the spring on the armature and the cogging force are additive. However, if the cogging force is reduced, a spring with an increased k-factor could be used or the amount of work needed to move the armature could be reduced. In the example of using a spring with greater k-factor on the armature, the spring improves the response time of the MMA when the MMA goes from a powered to an un-powered state. In other words, a spring with greater spring-back characteristics quickly returns the armature to its rest position when the electromotive force is removed.

Another drawback of conventional MMA design is the impact a lower pull force has acting on the armature when it is displaced from the center of the magnetically conductive conduit. This is particularly problematic for MMAs not intended to operate bi-directionally.

It would therefore be desirable to design an MMA less susceptible to cogging forces and/or lower pull forces.

Magnet actuators are known from EP 1 298 363 A2 which describes a gear change device comprising a select actuator for operating the shift lever of a transmission in the direction of selection and a shift actuator for operating the shift lever in the direction of shift. The select actuator has a casing, a shift lever support member that is arranged in the casing so as to slide in the axial direction and supports the shift lever, a magnetic moving means arranged on the outer periphery of the shift lever support member, a cylindrical fixed yoke arranged surrounding the magnetic moving means and a pair of coils arranged inside the fixed yoke. The casing is formed in a cylindrical shape by using nonmagnetic material and the magnetic moving means is constituted by an annular permanent magnet having magnetic poles in both end surfaces thereof and by a pair of moving yokes arranged on the outer sides of the permanent magnet.

US 5,896,076 describes an electromagnetic active vibration actuator configuration that combines two modes of operation to obtain the advantages of long stroke and linearity of voice coil type actuators and high efficiency of dual-gap solenoid type actuators. The actuator comprises an iron shell closed by end plates. Two coils are mounted immediately inside the iron shell and separated by an annular iron ring. An armature assembly is mounted radial inwards of the coils and incudes an annular permanent magnet and two iron pole pieces at the respective ends of the permanent magnet. The armature is movable in an axial direction by sliding on a central shaft which is fastened to the end plates. In alternative embodiments the actuator comprises multiple coils separated by multiple annular iron rings, wherein end rings are an optional design choice in the single or the multiple configurations.

EP 0 580 117 A2 describes a moving magnet type actuator with a magnet moving body including at least two permanent magnets of which same poles are confronting each other and an intermediate magnetic substance. The magnet moving body is movably arranged inside at least three coils. The at least three coils are connected so that current flows in different directions with a zone between the permanent magnets as a boundary. Whereby thrust and efficiency of the moving magnet type actuator is improved

### BRIEF DESCRIPTION OF THE INVENTION

The present invention refers to an actuator as defined in claim 1. Preferred embodiments are defined in the dependent claims. The actuator according to the invention is directed to an MMA that overcomes the aforementioned drawbacks. The MMA is constructed to include a magnetically conductive end-ring that is spaced from a magnet pole piece. The end-ring is constructed and spaced to provide a desired counter or anti-cogging force when the MMA is in a powered state. Thus, the subtractive impact of cogging forces that negatively affect conventional MMAs is mitigated by the attractive force between the end-ring and the MMA armature. The MMA is also preferably constructed to have an asymmetrical armature stroke.

Various other features, objects and advantages of the present invention will be made apparent from the following detailed description and the drawings.

### BRIEF DESCRIPTION OF THE DRAWINGS

The drawings illustrate one preferred embodiment presently contemplated for carrying out the invention.

In the drawings:
Fig. 1 is a graph illustrating a force vs. position curve for a known MMA.
Fig. 2 is a cross-sectional view of an MMA with a counter-cogging end-ring in accordance with one aspect of the invention.
Fig. 3 is a graph illustrating two force vs. position curves for exemplary MMAs, constructed in accordance with the present invention, relative to the force vs. position curve of Fig. 1.
Fig. 4 is a cross-sectional view of a bi-directional MMA with a pair of counter-cogging end-rings in accordance with another aspect of the invention.
Fig. 5 is a graph illustrating force vs. position curves for the bi-directional MMA shown in Fig. 4.
Fig. 6 is a cross-sectional view of another MMA with a counter-cogging end-ring and asymmetrical offset region of armature stroke in accordance with yet another aspect of the invention.
Fig. 7 is a graph illustrating force vs. position curves for (a) conventional MMA, (b) the MMA shown in Fig. 2, and (c) the MMA shown in Fig. 6.

### DETAILED DESCRIPTION OF THE PREFERRED EMBODIMENT

An exemplary MMA according to one embodiment of the invention is shown in cross-section in Fig. 2. As will be explained in greater detail below, the MMA is constructed to exert a counter or anti-cogging force. The MMA 16 is similar to conventional MMA design in that an armature 17 is designed to have a permanent magnetic ring 18 sandwiched between two magnetically conductive pole end pieces 20, 22 that are affixed to a shaft 24 fabricated of non-conductive material. The ring magnet is preferably a sintered, anisotropic, axially-oriented permanent magnet. Shaft 24 travels in both the positive and negative directions 26, 28, respectively, by an electromotive force produced by two in-series, oppositely wound, coils (windings) 30, 32. The coils 30, 32 are located in the radial air gap 34 between the outer diameter of the magnetically conductive pole pieces 20, 22 and the inner diameter of the magnetically conductive conduit 36. The coils 30, 32 are supported by bobbin 38. Similar to conventional MMA design, MMA 16 has a non-magnetic front bearing 40 and a non-magnetic mounting bracket 42. Opposite the front bearing 40 is a non-magnetic locknut 44 that secures the shaft 24 to the magnetic pole piece 20. The MMA further includes spring 46 that rests against pole piece 20. Preferably, spring 46 must be compressed to translate the shaft axially in direction 26.

The MMA 16 also has an annular endplate 48, that in the embodiment of Fig. 2, is positioned at the spring end of the armature 17. It is contemplated that the end-ring 48 could be integrally formed with the magnetic conduit 36 or be a separate component. The end-ring 48 is spaced from pole piece 20 by an air gap 50. The air gap 50, together with the size of the inner diameter 52 of the end-ring, effectively define an attraction force on the armature 17 that results in the net force acting on the armature as it moves away from the center 54 of the magnetically conductive conduit 36 to be greater than or equal to the force acting on the armature when the armature is in close proximity to the center of the magnetically conductive conduit 36. Thus, the end-ring's inner diameter and spaced relationship relative to pole piece 20 provides an anti-cogging or counter-cogging force. The end-ring is preferably made of steel.

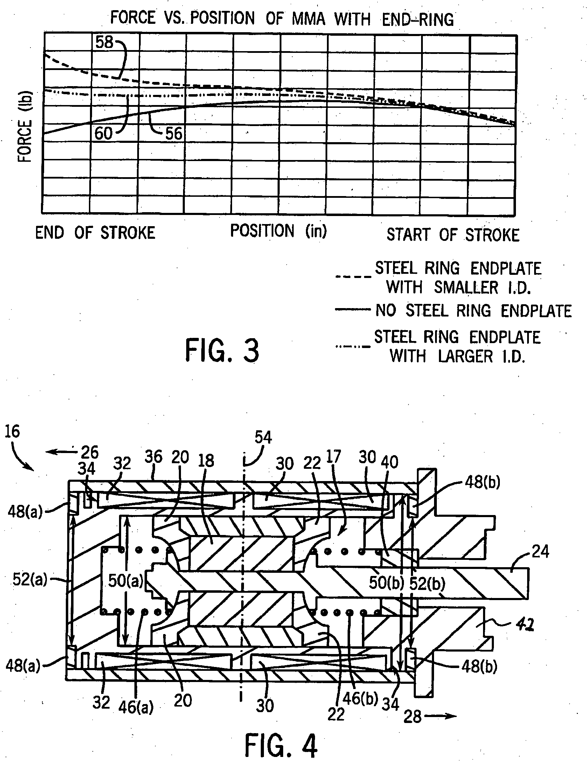

Fig. 3 shows three exemplary force vs. position curves. Curve 56 corresponds to a conventional MMA and is similar to that shown in Fig. 1. Curve 58 corresponds to one embodiment of the invention and curve 60 corresponds to another embodiment. More particularly, curve 58 corresponds to an MMA having an end-ring with a smaller inner diameter that of the MMA corresponding to curve 60. As illustrated, at the beginning of the armature stroke, the force vs. position curves are similar. However, differences are pronounced at the end of the stroke, i.e., position of the armature toward the end-ring. As expected, the curves illustrate that there is an inverse relationship between force and diameter size.

The MMA described with respect to Fig. 2 has a single end-ring. Such a construction is preferred for an MMA when the defined motion of the armature is not to be considered bi-directionally symmetrical. Thus, in the design shown in Fig. 2, the MMA has a single conductive end-ring at the end thereof that the armature is moving in the direction towards and not at the end from which the armature is traveling.

As shown in Fig. 4, an MMA constructed for bi-directionally symmetrical motion is contemplated. The MMA of Fig. 4 is similar to that of Fig. 2, but is constructed to have two end-rings 48(a), 48(b). Moreover, the MMA is constructed to have two biasing springs 46(a), 46(b). Similar to the MMA described at Fig. 2, selection of the end-ring inner diameters 52(a), 52(b) and air gap 50(a), 50(b) widths define the strength of the respective attractive forces placed on the armature 17. In this regard, the MMA is constructed such that force degradation at the end positions of armature travel are reduced as compared to the higher magnitude of force on the armature when it is traveling in the center 54 of the magnetically conductive conduit 36.

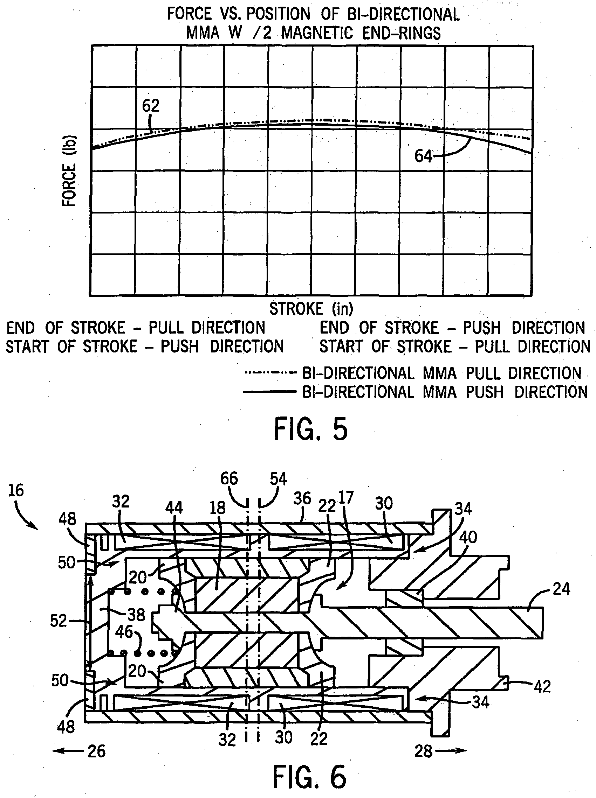

A force vs. position curve for the MMA of Fig. 4 is shown in Fig. 5. As illustrated, the curve in the pull direction 62 is similar to the curve in the push direction 64. Moreover, in both directions, variations in force across the entirety of the armature stroke are small.

As described above, the incorporation of one or more end-rings to provide a counter-cogging force improves the control and response of the MMA. It is also contemplated that additional anti-cogging effects can be provided by reducing the gap between the magnet pole pieces and the magnetically conductive conduit. In this regard, it has been found that reducing the radial gap between the outer diameter of the magnet pole pieces and the inner diameter of the magnetically conductive conduit has been effective in mitigating the cogging force placed on the armature during the central portion of its stroke. Thus, in one preferred embodiment, the magnet pole pieces are increased in size to reduce the aforementioned radial gap.

Referring now to Fig. 6, an MMA constructed in accordance with yet another embodiment of the invention is shown. The construction of the MMA shown in Fig. 6 is to negate the lower pull force that acts upon the armature when the armature is displaced from the radial centerline 54. The MMA illustrated in Fig. 6 is similar to the MMA shown in Fig. 2. That is, the MMA has a single end-ring 48 spaced from magnet pole piece 20 that, as described above, provides a counter or anti-cogging force. However, unlike the MMA illustrated in Fig. 2, the MMA of Fig. 6 is constructed to reduce the lower pull force acting on the armature 17 when the armature is displaced from the center of the magnetically conductive conduit 36.

The lower pull force is mitigated by shifting the central portion of the armature stroke to exist in a region offset from the center of the conduit 36. Thus, the central portion of the armature stroke is aligned with offset centerline 66. In one preferred embodiment, the offset centerline 66 is axially displaced from the conduit centerline 54 by 0.25 cm (0.100"). It is contemplated, however, that other displacement magnitudes may be used, but preferably in the range of 0.13 - 0.38 cm (0.050 - 0.150").

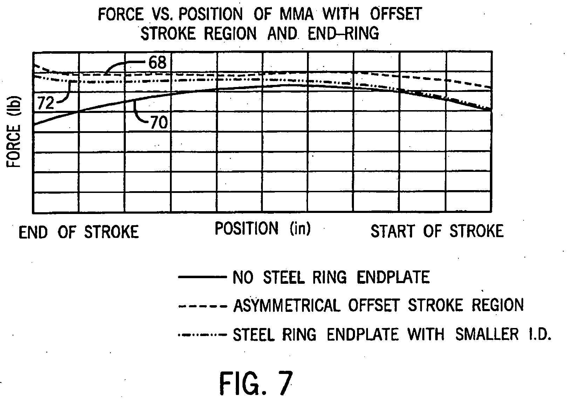

By altering the stroke region of the armature 17 so that it is asymmetrical about the conduit centerline 54, the MMA operates according to a relatively flat-shaped, constant force, force vs. position curve, such as that illustrated in Fig. 7. Operation along a flat-shaped force vs. position curve is much more desirable than the "umbrella"-shaped curve shown in Fig. 1. As shown in Fig. 7, the MMA of Fig. 6 operates according to a significantly flatter force vs. position curve 68 than a conventional MMA (curve 70) or the symmetrically-oriented MMA shown in Fig. 2 (curve 72).

The present invention has been described with respect to an MMA with improved control and response time. One skilled in the art will appreciate that such an MMA will be applicable in a number of industrial applications. In this regard, it is appreciated that the size of the end-ring(s), the air gap(s) between the end-ring(s) and the pole piece(s), etc. can be readily optimized for a given application without departing from the spirit and scope of the appending claims. Additional factors that should be considered in optimizing such an MMA for a given application; are the desired size and weight of the MMA, the travel distance needed for the armature, available power levels, desired accuracy and precision, and the like.

### Reference signs:

16 : actuator/ MMA
17 : armature
18 : permanent magnetic ring/ permanent magnet/ring magnet
20 : first pole endplate /magnetically conductive pole end piece/pole piece magnet
pole end plates/magnet pole pieces
22 : magnetically conductive pole end piece
24 : (non conductive) shaft
26 : positive direction
28 : negative direction
30 : coil (two in-series, oppositely wound,) windings
32 : coil (two in-series, oppositely wound,) windings
34 : radial air gap
36 : magnetically conductive conduit
38 : bobbin
40 : front bearing
42 : bracket
44 : locknut
46, 46(a), 46(b): spring
48 : annular endplate/end ring/ magnetically conductive endplate 48(a), 48(b) 50, 50(a), 50 (b) : air gap
52, 52(a), 52(b) : inner diameter (of the end-ring 48)
54 : center of conduit / conduit centerline
56, 58, 60, 62, 64 : curves
66 : offset centreline
68, 70 , 72 : curves

## Claims

1. An actuator (16) comprising:
a magnetic conduit (36) having a central bore having a first inner diameter; an armature (17) comprising a movable permanent magnet (18) and a pair of magnet pole end plates (20, 22) secured at opposite ends of the permanent magnet (18), the armature (17) arranged in the central bore and adapted to move linearly within the magnetic conduit (36) in first and second directions (26, 28) when an electromotive force is placed thereon;
a non-magnetic shaft extending through a second inner diameter of the permanent magnet (18) and adapted to travel with the armature in the first and second directions (26, 28), the shaft extending outside one of the ends of the magnetic conduit (36);
a bobbin (38) secured within the magnetic conduit (36);
a spring (46) disposed between the bobbin (38) and one of the magnet pole end plates (20) and adapted to apply a spring force that must be overcome when the armature is linearly moved in the first direction; and
a pair of oppositely-wound windings (30, 32) wrapped around the bobbin (38) and located in a radial air gap (34) defined between an outer diameter (50) of the pole end plates (20, 22) and the first inner diameter of the magnetic conduit (36), the pair of windings (30, 32) placing an electromotive force on the permanent magnet (18) when current is induced therein;
a ring-shaped magnetically conductive endplate (48) having a third inner diameter (52) smaller than the first inner diameter and connected to an end of the magnetic conduit (36) and spaced from the armature (17), so that the ring-shaped endplate (48) together with a gap defined between the ring-shaped endplate (48) and the permanent magnet (18) places an attractive force on the permanent magnet (18) of the armature (17) at least equal to a cogging force acting on the permanent magnet (18) of the armature (17) when the armature (17) moves from a center region of the magnetic conduit.

2. The actuator (16) of claim 1, wherein the armature (17) further includes a non-magnetic locknut (44) securing the non-magnetic shaft (24) to one magnet pole end plate (20).

3. The actuator (16) of claim 1, wherein the permanent magnet (18) of the armature (17) is sintered, anisotropic and axially oriented.

4. The actuator (16) of claim 1, wherein the actuator (16) is incorporated into a direct drive, two-terminal, non-commutated, single-phase, limited-motion electric motor.

5. The actuator (16) of claim 1, wherein the armature (17) is situated in the magnetic conduit (36) to be asymmetrical about the radially-oriented centreline (54) that is perpendicular to the central axis of the armature (17).

6. The actuator (16) of claim 1, wherein the magnetic conduit (36) defining a volume having the permanent magnet (18), non-conductive shaft (24), the pair of windings (30, 32), and ring-shaped endplate (48) disposed therein, and wherein the pair of windings (30, 32) is spaced apart from one another symmetrically about the radial centreline (54) of the magnetic conduit (36) defined perpendicular to an axis of magnet movement.

7. The actuator (16) of claim 6, wherein the electromotive force imparted decreases in magnitude as axial distance from the radial centreline (54) of the magnetic conduit (36) increases.

8. The actuator (16) of claim 6 wherein the non-conductive shaft (24) is axially displaced from the radial centreline (54) of the magnetic conduit (36) when at rest.

9. The actuator (16) of claim 6, wherein the spring (46) is operably connected to the nonconductive shaft (24) at one end and operably connected to the bobbin (38) supporting the pair of windings (30, 32) at an opposite end.

10. The actuator (16) of claim 1, wherein the non-conductive shaft (24) is caused to move from a rest position towards the ring-shaped end plate (48) when the electromotive force is placed on the permanent magnet (18).

11. The actuator (16) of claim 1, wherein the endplate (48) is formed of steel.

12. The actuator (16) of claim 1, wherein a magnetic circuit defined by the conduit (36), the ring-shaped end plate (48), the first pole endplate (20) spaced axially from the ring-shaped end plate (48), the permanent magnet (18) and the second pole endplate (22), is imparting the cogging force on the permanent magnet (18) when the permanent magnet (18) is disposed in close proximity to a center region of the conduit (36) and imparting a counter-cogging force on the permanent magnet (18) when the permanent magnet (18) moves away from the center region of the conduit (36).

13. The actuator (16) of claim 12, wherein a magnitude of the counter-cogging force is at least equal to that of the cogging force.

14. The actuator (16) of claim 13, wherein the magnitude of the counter-cogging force is defined by a combination of at least one of the ring-shaped end plate inner diameter (52), ring-shaped end plate thickness, ring-shaped end plate material composition, and the air gap (50) formed between the ring-shaped end plate (48) and the first pole end plate (20).

15. The actuator (16) of claim 1, wherein the armature (17) is movable along an axis perpendicular to the radial centreline (54), the armature (17) is having a linear range of motion defining an armature stroke; and
wherein a center of the armature stroke is offset from the radial centreline (54) of the magnetically conductive conduit (36).

16. The actuator (16) of claim 15, wherein the center of the armature stroke is offset from the radial centreline (54) by a magnitude in the range of 1.27mm - 3.81 mm (0.050-0.150").

17. The actuator (16) of claim 16, wherein the magnitude is 2.54 mm (0.100").

18. The actuator (16) of claim 15, wherein the center of the armature stroke is offset in a direction of movement of the armature (17) when the armature (17) is initially exposed to the electromotive force.

## Patentansprüche

1. Aktuator (16), der Folgendes umfasst:
eine magnetische Leitung (36), die eine zentrale Bohrung aufweist, die einen ersten Innendurchmesser besitzt;
einen Anker (17), der einen beweglichen Permanentmagneten (18) und ein Paar Magnetpolstirnplatten (20, 22), die an entgegengesetzten Enden des Permanentmagneten (18) befestigt sind, umfasst, wobei der Anker (17) in der zentralen Bohrung angeordnet ist und ausgelegt ist, sich in der magnetischen Leitung (36) linear in eine erste und in eine zweite Richtung (26, 28) zu bewegen, wenn eine elektromotorische Kraft daran angelegt wird;
eine nicht magnetische Welle, die sich durch einen zweiten Innendurchmesser des Permanentmagneten (18) erstreckt und die ausgelegt ist, sich mit dem Anker in die erste und in die zweite Richtung (26, 28) zu bewegen, wobei sich die Welle an einem der Enden der magnetischen Leitung (36) nach außen erstreckt;
einen Spulenträger (38), der in der magnetischen Leitung (36) befestigt ist; eine Feder (46), die zwischen dem Spulenträger (38) und einer der Magnetpolstirnplatten (20) angeordnet ist und die ausgelegt ist, eine Federkraft anzulegen, die überwunden werden muss, wenn der Anker linear in die erste Richtung bewegt wird; und
ein Paar entgegengesetzt gewickelter Wicklungen (30, 32), die um den Spulenträger (38) gewickelt sind und die in einem radialen Luftspalt (34) angeordnet sind, der zwischen einem Außendurchmesser (50) der Polstirnplatten (20, 22) und dem ersten Innendurchmesser der magnetischen Leitung (36) definiert ist, wobei das Wicklungspaar (30, 32) eine elektromotorische Kraft an den Permanentmagneten (18) anlegt, wenn darin ein Strom induziert wird;
eine ringförmige, magnetisch leitfähige Stirnplatte (48), die einen dritten Innendurchmesser (52) aufweist, der kleiner als der erste Innendurchmesser ist, und die mit einem Ende der magnetischen Leitung (36) verbunden und von dem Anker (17) beabstandet ist, derart, dass die ringförmige Stirnplatte (48) zusammen mit einem Spalt, der zwischen der ringförmigen Stirnplatte (48) und dem Permanentmagneten (18) definiert ist, eine anziehende Kraft an den Permanentmagneten (18) des Ankers (17) anlegt, die mindestens gleich einer Verrastungskraft ist, die auf den Permanentmagneten (18) des Ankers (17) wirkt, wenn sich der Anker (17) aus einem Zentralbereich der magnetischen Leitung bewegt.

2. Aktuator (16) nach Anspruch 1, wobei der Anker (17) ferner eine nicht magnetische Sicherungsmutter (44) enthält, die die nicht magnetische Welle (24) an einer der Magnetpolstirnplatten (20) befestigt.

3. Aktuator (16) nach Anspruch 1, wobei der Permanentmagnet (18) des Ankers (17) gesintert, anisotrop und axial ausgerichtet ist.

4. Aktuator (16) nach Anspruch 1, wobei der Aktuator (16) in einen nicht umgepolten Direktantriebs-Einzelphasen-Elektromotor mit zwei Anschlüssen und Laufbegrenzung eingebaut ist.

5. Aktuator (16) nach Anspruch 1, wobei der Anker (17) derart in der magnetischen Leitung (36) platziert ist, dass er um die radial ausgerichtete Zentrallinie (54) asymmetrisch ist, die zur Zentralachse des Ankers (17) senkrecht steht.

6. Aktuator (16) nach Anspruch 1, wobei die magnetische Leitung (36) ein Volumen definiert, in dem der Permanentmagnet (18), die nicht leitende Welle (24), das Wicklungspaar (30, 32) und die ringförmige Stirnplatte (48) angeordnet sind, und wobei das Wicklungspaar (30, 32) voneinander symmetrisch um die radiale Zentrallinie (54) der magnetischen Leitung (36) beabstandet ist, die senkrecht zu einer Achse der Magnetbewegung definiert ist.

7. Aktuator (16) nach Anspruch 6, wobei die angelegte elektromotorische Kraft im Betrag abnimmt, wenn sich der axiale Abstand von der radialen Zentrallinie (54) der magnetischen Leitung (36) erhöht.

8. Aktuator (16) nach Anspruch 6, wobei die nicht leitende Welle (24) axial von der radialen Zentrallinie (54) der magnetischen Leitung (36) versetzt ist, wenn sie sich in Ruhe befindet.

9. Aktuator (16) nach Anspruch 6, wobei die Feder (46) an einem Ende funktionstechnisch mit der nicht leitenden Welle (24) verbunden ist und an einem entgegengesetzten Ende funktionstechnisch mit dem Spulenträger (38) verbunden ist, der das Wicklungspaar (30, 32) trägt.

10. Aktuator (16) nach Anspruch 1, wobei die nicht leitende Welle (24) veranlasst wird, sich von einer Ruheposition zu der ringförmigen Stirnplatte (48) zu bewegen, wenn die elektromotorische Kraft an den Permanentmagneten (18) angelegt wird.

11. Aktuator (16) nach Anspruch 1, wobei die Stirnplatte (48) aus Stahl ausgebildet ist.

12. Aktuator (16) nach Anspruch 1, wobei eine magnetische Schaltung, die durch die Leitung (36), durch die ringförmige Stirnplatte (48), durch die erste Polstirnplatte (20), die axial von der ringförmigen Stirnplatte (48) beabstandet ist, durch den Permanentmagneten (18) und durch die zweite Polstirnplatte (22) definiert ist, die Verrastungskraft an den Permanentmagneten (18) anlegt, wenn der Permanentmagnet (18) in enger räumlicher Nähe zu einem Zentralbereich der Leitung (36) angeordnet ist, und eine Gegenverrastungskraft an den Permanentmagneten (18) anlegt, wenn sich der Permanentmagnet (18) von dem Zentralbereich der Leitung (36) wegbewegt.

13. Aktuator (16) nach Anspruch 12, wobei ein Betrag der Gegenverrastungskraft mindestens gleich dem Betrag der Verrastungskraft ist.

14. Aktuator (16) nach Anspruch 13, wobei der Betrag der Gegenverrastungskraft durch eine Kombination aus dem Innendurchmesser (52) der ringförmigen Stirnplatte und/oder der Stärke der ringförmigen Stirnplatte und/oder der Materialzusammensetzung der ringförmigen Stirnplatte und/oder dem Luftspalt (50), der zwischen der ringförmigen Stirnplatte (48) und der ersten Polstirnplatte (20) ausgebildet ist, definiert ist.

15. Aktuator (16) nach Anspruch 1, wobei der Anker (17) entlang einer Achse beweglich ist, die zu der radialen Zentrallinie (54) senkrecht steht, wobei der Anker (17) einen linearen Bewegungsbereich aufweist, der einen Ankerhub definiert; und
wobei ein Zentrum des Ankerhubs von der radialen Zentrallinie (54) der magnetisch leitfähigen Leitung (36) versetzt ist.

16. Aktuator (16) nach Anspruch 15, wobei das Zentrum des Ankerhubs von der radialen Zentrallinie (54) um einen Betrag im Bereich von 1,27 mm-3,81 mm (0,050"-0,150") versetzt ist.

17. Aktuator (16) nach Anspruch 16, wobei der Betrag 2,54 mm (0,100") ist.

18. Aktuator (16) nach Anspruch 15, wobei das Zentrum des Ankerhubs in einer Richtung der Bewegung des Ankers (17), wenn der Anker (17) anfänglich der elektromotorischen Kraft ausgesetzt wird, versetzt ist.

## Revendications

1. Actionneur (16) comprenant :
un conduit magnétique (36) comportant un alésage central ayant un premier diamètre intérieur ; une armature (17) comprenant un aimant permanent mobile (18) et deux plaques d'extrémité de pôle d'aimant (20, 22) fixées à des extrémités opposées de l'aimant permanent (18), l'armature (17) étant disposée dans l'alésage central et conçue pour se déplacer linéairement à l'intérieur du conduit magnétique (36) dans des première et seconde directions (26, 28) quand une force électromotrice y est appliquée ;
un arbre non magnétique s'étendant dans un deuxième diamètre intérieur de l'aimant permanent (18) et conçu pour se déplacer avec l'armature dans les première et seconde directions (26, 28), l'arbre s'étendant à l'extérieur d'une des extrémités du conduit magnétique (36) ;
une bobine (38) fixée à l'intérieur du conduit magnétique (36) ;
un ressort (46) disposé entre la bobine (38) et l'une des plaques d'extrémité de pôle d'aimant (20), et conçu pour appliquer une force de ressort qui doit être contrée quand l'armature est déplacée linéairement dans la première direction ; et
deux enroulements (30, 32) enroulés dans une direction opposée autour de la bobine (38) et situés dans un entrefer radial (34) défini entre un diamètre extérieur (50) des plaques d'extrémité de pôle (20, 22) et le premier diamètre intérieur du conduit magnétique (36), les deux enroulements (30, 32) exerçant une force électromotrice sur l'aimant permanent (18) quand un courant y est induit ;
une plaque d'extrémité magnétiquement conductrice en forme d'anneau (48) comportant un troisième diamètre intérieur (52) inférieur au premier diamètre intérieur et connecté à une extrémité du conduit magnétique (36) et espacé de l'armature (17), de sorte que la plaque d'extrémité en forme d'anneau (48) conjointement avec un entrefer défini entre la plaque d'extrémité en forme d'anneau (48) et l'aimant permanent (18) exercent une force d'attraction sur l'aimant permanent (18) de l'armature (17) au moins égale à une force de saillance agissant sur l'aimant permanent (18) de l'armature (17) quand l'armature (17) se déplace depuis une région centrale du conduit magnétique.

2. Actionneur (16) selon la revendication 1, dans lequel l'armature (17) comprend en outre un écrou freiné non magnétique (44) fixant l'arbre non magnétique (24) à une plaque d'extrémité de pôle d'aimant (20).

3. Actionneur (16) selon la revendication 1, dans lequel l'aimant permanent (18) de l'armature (17) est fritté, anisotrope et orienté axialement.

4. Actionneur (16) selon la revendication 1, l'actionneur (16) étant renfermé dans un moteur électrique à entraînement direct, à deux bornes, non commuté, monophasé et à mouvement limité.

5. Actionneur (16) selon la revendication 1, dans lequel l'armature (17) est située dans le conduit magnétique (36) de manière à être asymétrique par rapport à l'axe orienté radialement (54) qui est perpendiculaire à l'axe central de l'armature (17).

6. Actionneur (16) selon la revendication 1, dans lequel le conduit magnétique (36) définit un volume renfermant l'aimant permanent (18), l'arbre non conducteur (24), les deux enroulements (30, 32) et la plaque d'extrémité en forme d'anneau (48), et dans lequel les deux enroulements (30, 32) sont symétriquement espacés l'un de l'autre par rapport à l'axe radial (54) du conduit magnétique (36) défini perpendiculairement à un axe de déplacement d'aimant.

7. Actionneur (16) selon la revendication 6, dans lequel la force électromotrice exercée diminue en intensité quand la distance axiale à partir de l'axe radial (54) du conduit magnétique (36) diminue.

8. Actionneur (16) selon la revendication 6, dans lequel l'arbre non conducteur (24) est déplacé axialement à partir de l'axe radial (54) du conduit magnétique (36) lorsqu'il est au repos.

9. Actionneur (16) selon la revendication 6, dans lequel le ressort (46) est connecté de manière fonctionnelle à l'arbre non conducteur (24) au niveau d'une extrémité, et connecté de manière fonctionnelle à la bobine (38) supportant les deux enroulements (30, 32) au niveau d'une extrémité opposée.

10. Actionneur (16) selon la revendication 1, dans lequel l'arbre non conducteur (24) est amené à se déplacer d'une position de repos vers la plaque d'extrémité en forme d'anneau (48) quand la force électromotrice est exercée sur l'aimant permanent (18).

11. Actionneur (16) selon la revendication 1, dans lequel la plaque d'extrémité (48) est en acier.

12. Actionneur (16) selon la revendication 1, dans lequel un circuit magnétique défini par le conduit (36), la plaque d'extrémité en forme d'anneau (48), la première plaque d'extrémité de pôle (20) espacée axialement de la plaque d'extrémité en forme d'anneau (48), l'aimant permanent (18) et la seconde plaque d'extrémité de pôle (22) exerce la force de saillance sur l'aimant permanent (18) quand l'aimant permanent (18) est situé tout proche d'une région centrale du conduit (36), et exerce une contre-force de saillance sur l'aimant permanent (18) quand l'aimant permanent (18) se déplace à l'opposé de la région centrale du conduit (36).

13. Actionneur (16) selon la revendication 12, dans lequel une intensité de la contre-force de saillance est au moins égale à celle de la force de saillance.

14. Actionneur (16) selon la revendication 13, dans lequel l'intensité de la contre-force de saillance est définie par une combinaison du diamètre intérieur (52) de la plaque d'extrémité en forme d'anneau, de l'épaisseur de la plaque d'extrémité en forme d'anneau, de la composition du matériau de la plaque d'extrémité en forme d'anneau, et de l'entrefer (50) formé entre la plaque d'extrémité en forme d'anneau (48) et la première plaque d'extrémité de pôle (20).

15. Actionneur (16) selon la revendication 1, dans lequel l'armature (17) est mobile le long d'un axe perpendiculaire à l'axe radial (54), l'armature (17) ayant une amplitude linéaire de déplacement définissant une course d'armature ; et
dans lequel un centre de la course d'armature est décalé par rapport à l'axe radial (54) du conduit magnétiquement conducteur (36).

16. Actionneur (16) selon la revendication 15, dans lequel le centre de la course d'armature est décalé par rapport à l'axe radial (54) d'une grandeur de l'ordre de 1,27 mm à 3,81 mm (0,050 à 0,150").

17. Actionneur (16) selon la revendication 16, dans lequel la grandeur est égale à 2,54 mm (0,100").

18. Actionneur (16) selon la revendication 15, dans lequel le centre de la course d'armature est décalé dans une direction de déplacement de l'armature (17) quand l'armature (17) est initialement exposée à la force électromotrice.
